(19) Europäisches Patentamt
European Patent Office
Office européen des brevets

(11) **EP 3 334 958 B1**

(12) **EUROPÄISCHE PATENTSCHRIFT**

(45) Veröffentlichungstag und Bekanntmachung des Hinweises auf die Patenterteilung:
**29.04.2020 Patentblatt 2020/18**

(21) Anmeldenummer: **16750808.4**

(22) Anmeldetag: **09.08.2016**

(51) Int Cl.:
*F16H 43/02* (2006.01)          *B25D 9/04* (2006.01)
*B25D 9/12* (2006.01)

(86) Internationale Anmeldenummer:
**PCT/EP2016/068928**

(87) Internationale Veröffentlichungsnummer:
**WO 2017/025527 (16.02.2017 Gazette 2017/07)**

(54) **VORRICHTUNG UND VERWENDUNG ZUR ERZEUGUNG IMPULSDYNAMISCHER PROZESSKRÄFTE**

APPARATUS AND ITS USE CREATING DYNAMIC PULSATION PROCESS FORCES

DISPOSITIF ET SON UTILISATION POUR CREATION DE FORCES D'IMPULSION DYNAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.08.2015 CH 11592015**

(43) Veröffentlichungstag der Anmeldung:
**20.06.2018 Patentblatt 2018/25**

(73) Patentinhaber: **Hatebur Umformmaschinen AG 4153 Reinach (CH)**

(72) Erfinder: **VULCAN, Mihai 4114 Hofstetten (CH)**

(74) Vertreter: **Bohest AG
Holbeinstrasse 36-38
4051 Basel (CH)**

(56) Entgegenhaltungen:
**WO-A1-2006/022584      WO-A1-2011/077001
DE-A1- 2 107 510      FR-A1- 2 421 035
FR-A5- 2 091 649      FR-A5- 2 139 398
GB-A- 128 589      US-A- 3 395 536
US-A- 4 342 255**

**Beschreibung**

Die vorliegende Erfindung betrifft eine Vorrichtung zur Erzeugung impulsdynamischer Prozesskräfte gemäss dem Oberbegriff des unabhängigen Patentanspruchs 1 sowie eine Verwendung einer solchen Vorrichtung. Eine solche Vorrichtung und die Verwendung dieser Vorrichtung sind aus dem Dokument DE2107510A1 bekannt.

Unter impulsdynamischen Prozesskräften sind schlagartig wirkende Kräfte zu verstehen, wie sie z.B. zum Abscheren von Werkstücken von einem Stangenmaterial in Umformmaschinen oder bei der Materialverdichtung in der Pulvermetallurgie erforderlich sind.

Als Umformen ist in Anlehnung an DIN 8580 die gezielte Änderung der Form, der Oberfläche und/oder der Werkstoffeigenschaften eines Körpers unter Beibehaltung von Masse- und Stoffzusammenhang zu verstehen. Wird durch die Umformung das Formänderungsvermögen des Werkstoffs erschöpft, so kommt es abhängig vom eingesetzten Verfahren beispielsweise zum Trennen des Werkstoffs (z.B. Abscheren von einem Stangenmaterial) oder zum Verdichten des Werkstoffs (z.B. Kompaktieren in der Pulvermetallurgie). Für die Umformung benötigt ein Werkstoff eine Energiezufuhr, die in der Regel von zweckgebundenen Maschinen zur Verfügung gestellt wird. Der Werkstoff erwärmt sich während des Umformvorgangs und gibt die Wärme an die Umgebung (Werkzeuge, Luft usw.) ab. Aus Literatur und Praxis ist bekannt, dass beim Schervorgang ein adiabatisches Scherversagen eintritt, wenn die Festigkeitsreduzierung durch die Temperaturerhöhung grösser ist als der Festigkeitszuwachs aufgrund der Verformungsverfestigung und der Dehnratenverfestigung. Aufgrund der erhöhten Geschwindigkeit des Schermessers entsteht in unmittelbarer Nähe der Scherkante eine Temperaturerhöhung, deren Gradient grösser ist als der Gradient der Wärmeabfuhr in die benachbarten Zonen aufgrund der Wärmeleitfähigkeit des eingesetzten Materials. Es entsteht ein sogenanntes Scherband, dessen Fortpflanzungsgeschwindigkeit in Scherrichtung ein Vielfaches (Grössenordnung 10-40x für Stahl) der Messergeschwindigkeit beträgt. Eine Voraussetzung für die Entstehung des Scherbands ist eine gleichbleibende oder grösser werdende Geschwindigkeit des Trennwerkzeugs (Messer). Damit diese Geschwindigkeitsbedingung erfüllt werden kann, muss dem Trenn- bzw. Scherprozess eine um ein Vielfaches höhere Energie zugeführt werden, als für den Schervorgang eigentlich gebraucht wird.

In der GB 128589 A ist eine Vorrichtung beschrieben, mit welcher ein hydraulischer Impuls erzeugt und in Form einer Stosswelle über eine Leitung zu einer entfernten Empfängeranordnung übertragen werden kann, die den Impuls zum Umschalten z.B. einer Signalisierungseinrichtung für den Eisenbahnverkehr umsetzt. Die Vorrichtung weist eine erste und eine mit dieser über eine verschliessbare Restriktion verbundene zweite Kammer sowie eine mit der zweiten Kammer verbundene Leitung auf, an deren Ende sich die Empfängeranordnung befindet. Die beiden Kammern und die Leitung sind mit einem flüssigen Hydraulikmedium befüllt. In die erste Kammer ist ein Plunger einführbar, mit welchem das Hydraulikmedium komprimierbar ist, so dass sich der Druck im Medium erhöht. In der zweiten Kammer befindet sich ein verschiebbarer Kolben mit einem Ventilkörper, der im Ruhezustand der Vorrichtung die Restriktion verschliesst. Wenn der Plunger ausgelöst von einer äusseren Kraft vorübergehend in die erste Kammer eingeführt wird, erhöht sich dort der Druck solange, bis sich der Kolben in der zweiten Kammer bewegt und sich der Ventilkörper von der Restriktion abhebt. Dadurch kann der erhöhte Druck in der ersten Kammer den Kolben beaufschlagen, wodurch in der zweiten Kammer ein Druckimpuls erzeugt wird, der sich mit Schallgeschwindigkeit durch die zweite Kammer und die Leitung zur Empfängeranordnung fortpflanzt und dort einen federbelasteten Aktuatorkolben beaufschlagt, wodurch dieser kurz ausgelenkt wird. Nach Abklingen des Druckimpulses wird der Aktuatorkolben durch Federkraft wieder zurückgestellt. Der Kolben in der zweiten Kammer kehrt in seine Ausgangsstellung zurück und verschliesst die Restriktion. Der Plunger wird dabei wieder aus der ersten Kammer gedrückt.

Die aus der GB 128589 A bekannte Vorrichtung kann prinzipiell nur relativ schwache und wenig Energie beinhaltende Impulse erzeugen, weil die im Verhältnis zum Durchmesser sehr lange Übertragungsleitung, die den Generator mit dem Empfänger verbindet, stark federnd wirkt und den Kraftimpuls beträchtlich reduziert. Damit ist diese Vorrichtung nicht geeignet, sehr starke impulsdynamische Kräfte mit hohem Energieinhalt zur Verfügung zu stellen, wie sie für Anwendungen in Trennoder Verdichtungsprozessen erforderlich sind. Ausserdem ist mit dieser bekannten Vorrichtung kein substantieller Volumenstrom erzeugbar, welcher auf der Seite der Empfängeranordnung einen für solche Anwendungen erforderlichen Hub des Aktuatorkolbens bei gleichzeitig hoher Schubkraft bzw. hohem Stossdruck bewirken könnte.

Der vorliegenden Erfindung liegt daher die Aufgabe zugrunde, eine Vorrichtung zur Erzeugung impulsdynamischer Prozesskräfte bereitzustellen, welche mittels einer vergleichsweise niedrigen Antriebsleistung eine hohe Energiemenge speichern und innerhalb einer sehr kurzen Zeit abgeben kann, so dass (kurzzeitig) hohe Prozesskräfte mit gleichzeitig hohem Energieinhalt zur Verfügung stehen.

Diese Aufgabe wird durch die erfindungsgemässe Vorrichtung gelöst, wie sie im unabhängigen Patentanspruch 1 definiert ist. Besonders vorteilhafte Ausführungsvarianten der Erfindung ergeben sich aus den abhängigen Patentansprüchen.

Eine erfindungsgemässe Vorrichtung zur Erzeugung impulsdynamischer Prozesskräfte umfasst die Merkmale des Anspruchs 1.

Dabei weist der Schlagbolzen einen ersten Bolzenabschnitt mit einem grösseren Querschnitt und einen zweiten Bolzenabschnitt mit einem kleineren Querschnitt auf, wobei der erste Bolzenabschnitt einen den zweiten Bolzenabschnitt umgebenden Innenraum der Bolzenkammer gegenüber der Verbindungskammer abdichtet. An die Bolzenkammer ist mindestens ein Druckspeicher mit unter Druck stehendem Druckmedium angeschlossen, der über eine Anschlussöffnung mit dem Innenraum der Bolzenkammer in kommunizierender Verbindung steht. Der Öffnungsquerschnitt der Anschlussöffnung verjüngt sich in Richtung vom Stufenkolben weg. Die Ausbildung des Schlagbolzens derart, dass ein Innenraum der Bolzenkammer gegenüber der Verbindungskammer abgedichtet wird, und die kommunizierende Verbindung dieses Innenraums mit mindestens einem Druckspeicher mit unter Druck stehendem Druckmedium ermöglichen einerseits die Beaufschlagung des Schlagbolzens von der Verbindungskammer her mit Impulsen mit hohem Energieinhalt und andererseits eine sichere Rückführung des Schlagbolzens in seine Ausgangsposition durch das Druckmedium. Die Vorrichtung erzeugt nicht nur einen schnellen Impuls, sondern auch einen ausreichenden Volumenstrom und einen ausreichenden Hub des Schlagbolzens bei grosser Kraft und hohem Energieinhalt. Vorzugsweise ist die Bolzenkammer der Verbindungskammer unmittelbar nachgeordnet. Durch die Anordnung der Bolzenkammer unmittelbar nach der Verbindungskammer wird eine sehr kurze Impulswegleitung bei gleichzeitig hohem Stossdruck erreicht.

Mit Vorteil weist die Vorrichtung zwei oder mehrere Druckspeicher mit zugeordneten Anschlussöffnungen auf, welche in der Bolzenkammer diametral gegenüberliegend bzw. gleichabständig angeordnet sind. Dadurch wird vermieden, dass beim Ausfahren des Schlagbolzens strömungsbedingte Querkräfte entstehen, die den Schlagbolzen aus der Achse bringen und somit einen schnellen Verschleiss hervorrufen können.

Vorteilhafterweise ist der Schlagbolzen in der Bolzenkammer bis zu einer Endlage ausfahrbar und weist die Vorrichtung eine Endlagendämpfungsanordnung auf, welche den Schlagbolzen vor Erreichen seiner Endlage abbremst. Auf diese Weise wird sichergestellt, dass die Restenergie des Schlagbolzens abgefangen wird und der Schlagbolzen seine Endlage mit verminderter Geschwindigkeit erreicht, wodurch ein hartes Aufstossen des Schlagbolzens auf einen allfälligen mechanischen Anschlag vermieden wird.

Gemäss einer besonders vorteilhaften Ausführung ist die mindestens eine Anschlussöffnung für den Druckspeicher so in der Bolzenkammer angeordnet, dass sie beim Ausfahren des Schlagbolzens durch den ersten Bolzenabschnitt zunehmend verschlossen wird und der dadurch entstehende Staudruck den Schlagbolzen bis zum vollständigen Stillstand bremst. Die Endlagendämpfung des Schlagbolzens kann so auf einfache Weise realisiert werden. Vorzugsweise ist die Endlage des Schlagbolzens durch einen Anschlag begrenzt. Dadurch kann ein werkzeugseitiges Überschiessen des

Schlagbolzens vermieden werden.

Erfindungsgemäß ist der Öffnungsquerschnitt der mindestens einen Anschlussöffnung in Richtung vom Stufenkolben weg, zum Anschlag hin, verjüngend ausgebildet. Dadurch wird der Aufbau des den Schlagbolzen bremsenden Staudrucks begünstigt.

Vorteilhafterweise ist der Schlagbolzen mittels des mindestens einen Druckspeichers in eine Anfangsposition rückfahrbar. Dies erfolgt durch Einströmen von Druckmedium in den Innenraum der Bolzenkammer, wodurch der Schlagbolzen in Richtung Verbindungskammer gedrückt wird. Die Rückführung des Schlagbolzens in seine Anfangsposition kann so auf einfache Art realisiert werden.

Die Mittel zur temporären Erhöhung des Drucks des in der Druckkammer befindlichen Hydraulikmediums können zum Beispiel einen Hochdruckspeicher umfassen, der über ein Ventil Druckimpulse an die Druckkammer abgibt.

Vorteilhafterweise sind die Mittel durch einen in die Druckkammer einschiebbaren Plunger zur Kompression des in der Druckkammer befindlichen Hydraulikmediums realisiert, wobei die Vorrichtung vorteilhafterweise einen Plungerantrieb zum Einschieben des Plungers in die Druckkammer umfasst. Der Plungerantrieb erzeugt bei relativ geringer Leistung eine hohe Energie, die dann in kürzester Zeit an den Schlagbolzen abgegeben wird.

Vorteilhafterweise weist die Vorrichtung Mittel zur Aufrechterhaltung des Fülldrucks in der Druckkammer, im Übertragungsraum und im Innenraum der Bolzenkammer auf. Die Mittel zur Aufrechterhaltung des Fülldrucks erlauben es, Leckage-Verluste während des Betriebs der Vorrichtung zu ersetzen.

Zweckmässigerweise weist die Vorrichtung Leitungen auf, über welche beim Verschieben des Stufenkolbens und des Schlagbolzens durch Dichtungsspalte austretendes oder verdrängtes Hydraulikmedium oder Druckmedium einem Auffangtank zuführbar ist. Auf diese Weise wird sichergestellt, dass austretendes oder verdrängtes Hydraulikmedium oder Druckmedium kontrolliert abgeführt wird.

Die erfindungsgemässe Vorrichtung ist besonders geeignet zur Verwendung für den Antrieb eines Werkzeugs in einer Umformeinrichtung, einer Trenneinrichtung oder einer Verdichtungseinrichtung. Insbesondere kann dabei das Werkzeug ein Scherwerkzeug zum Abscheren eines Werkstücks von einem Stangenmaterial oder ein Schlaghammer zum Verdichten oder zum Zerbrechen eines Materials sein.

Im Folgenden wird die erfindungsgemässe Vorrichtung unter Bezugnahme auf die beigefügten Zeichnungen anhand von Ausführungsbeispielen detaillierter beschrieben. Es zeigen:

Fig. 1 - einen Axialschnitt durch ein erstes Ausführungsbeispiel der erfindungsgemässen Vorrichtung;

Fig. 2-6   - vereinfachte Schnittdarstellungen der Vorrichtung gemäss Fig. 1 in verschiedenen Betriebsphasen;

Fig. 7   - einen Axialschnitt durch ein zweites Ausführungsbeispiel der erfindungsgemässen Vorrichtung;

Fig. 8   - einen Axialschnitt durch eine erfindungsgemäße Bolzenkammer ohne Schlagbolzen;

Fig. 9   - einen weiteren Axialschnitt der Bolzenkammer mit einigen Details; und

Fig. 10-11   - eine schematische Darstellung des Einsatzes der Vorrichtung in einem Scherprozess.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

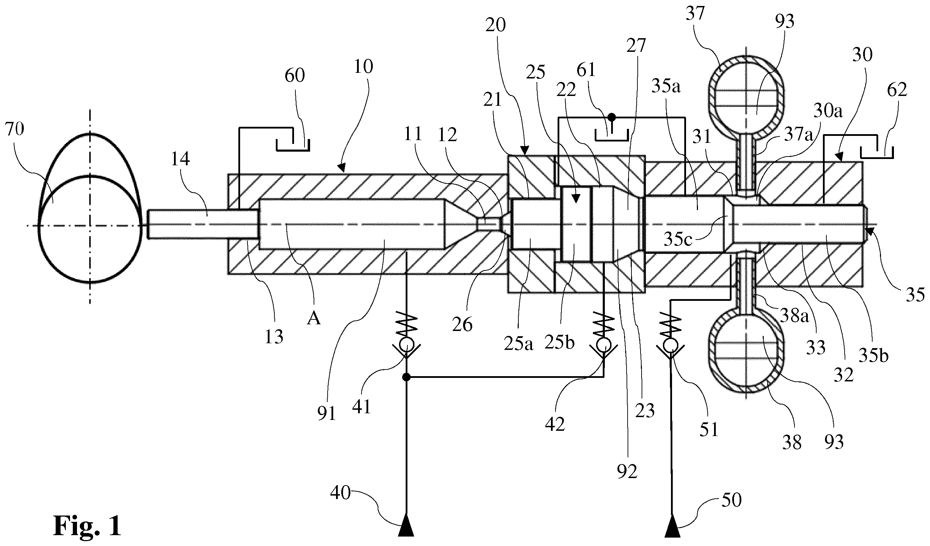

Die in Fig. 1 dargestellte Vorrichtung umfasst drei längs einer gemeinsamen Achse A fluchtend hintereinander angeordnete Kammern, und zwar eine Druckkammer 10, eine Verbindungskammer 20 und eine Bolzenkammer 30.

Die einen hydraulischen Energiespeicher bildende Druckkammer 10, in der unter Druck stehendes Hydraulikmedium 91 angeordnet ist, mündet über eine axiale Restriktion bzw. Blende 11 in die nachfolgende Verbindungskammer 20, wobei die Mündungsöffnung als konischer Ventilsitz 12 ausgebildet ist. An der der Blende 11 gegenüberliegenden Stirnwand der Druckkammer 10 befindet sich eine axiale Durchführungsöffnung 13, durch welche hindurch ein Verdrängungskörper in Form eines zylindrischen Plungers 14 axial ein- und auswärts verschiebbar angeordnet ist.

Die Verbindungskammer 20 weist aufeinanderfolgend zwei zylindrische Kammerabschnitte 21 und 22 und einen sich konisch verjüngenden Kammerabschnitt 23 auf, wobei der konische Kammerabschnitt 23 in die anschliessende Bolzenkammer 30 mündet und der mittlere, zylindrische Kammerabschnitt 22 einen etwas grösseren Innendurchmesser aufweist als der der Druckkammer 10 zugewandte Kammerabschnitt 21. In der Verbindungskammer 20 ist ein axial verschiebbarer Stufenkolben 25 mit zwei an die Innendurchmesser der beiden zylindrischen Kammerabschnitte 21 und 22 der Verbindungskammer 20 angepassten Kolbenabschnitten 25a und 25b angeordnet. Der im Durchmesser bzw. Querschnitt etwas grössere, der Bolzenkammer 30 zugewandte Kolbenabschnitt 25b dichtet einen Übertragungsraum 27 der Verbindungskammer 20 zwischen dem Kolbenabschnitt 25b und der Bolzenkammer 30 gegenüber der Seite der Verbindungskammer 20 ab, die der Bolzenkammer 30 abgewandt bzw. der Druckkammer 10 zugewandt ist. Im Übertragungsraum 27 ist unter Druck stehendes Hydraulikmedium 92 angeordnet. Der im Durchmesser bzw. Querschnitt etwas kleinere Kolbenabschnitt 25a weist an seiner Stirnseite einen konischen Ventilkörper 26 auf, welcher gegengleich zum Ventilsitz 12 der Druckkammer 10 ausgebildet ist und in der in Fig. 1 gezeigten Stellung die Mündungsöffnung und damit die Blende 11 der Druckkammer 10 verschliesst. Der Ventilkörper 26 und der Ventilsitz 12 können auch eine andere Geometrie aufweisen. Ebenso müssen der Stufenkolben 25 und die Verbindungskammer 20 nicht unbedingt kreisförmige Aussen- bzw. Innenquerschnitte aufweisen.

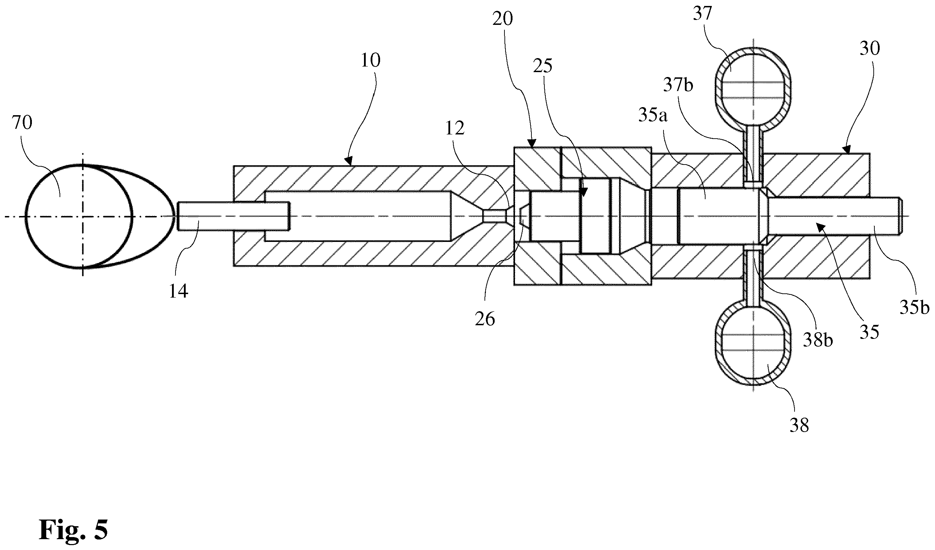

Die Bolzenkammer 30 weist einen zylindrischen Kammerabschnitt 31 und eine zylindrische Durchführungsöffnung 32 auf, wobei der der Verbindungskammer 20 zugewandte Kammerabschnitt 31 einen grösseren Innendurchmesser bzw. Querschnitt als die zylindrische Durchführungsöffnung 32 aufweist. Ein Übergang 33 zwischen dem zylindrischen Kammerabschnitt 31 und der Durchführungsöffnung 32 ist konisch ausgebildet. In der Bolzenkammer 30 ist ein Schlagbolzen 35 mit zwei an die Innendurchmesser des zylindrischen Kammerabschnitts 31 bzw. der Durchführungsöffnung 32 der Bolzenkammer 30 angepassten Bolzenabschnitten 35a und 35b axial verschiebbar angeordnet. Ein Übergang 35c zwischen dem einen grösseren Querschnitt aufweisenden ersten Bolzenabschnitt 35a und dem einen kleineren Querschnitt aufweisenden zweiten Bolzenabschnitt 35b ist zum Übergang 33 zwischen dem zylindrischen Kammerabschnitt 31 und der Durchtrittsöffnung 32 gegengleich konisch ausgebildet. Der einen grösseren Querschnitt aufweisende erste Bolzenabschnitt 35a dichtet einen den zweiten Bolzenabschnitt 35b umgebenden Innenraum 30a der Bolzenkammer 30 gegenüber der Verbindungskammer 20 ab. Der Schlagbolzen 35 und die Bolzenkammer 30 können auch von der Kreisform abweichende Aussen- bzw. Innenquerschnitte aufweisen. Der Schlagbolzen 35 ist zwischen in den Figuren 1 und 5 dargestellten Extremstellungen hin und zurück beweglich, wobei der im Durchmesser bzw. Querschnitt kleinere Bolzenabschnitt 35b je nach Position des Schlagbolzens 35 mehr oder weniger aus der Bolzenkammer 30 herausragt (ausgefahren ist).

Die Druckkammer 10 und die Verbindungskammer 20 bzw. der Übertragungsraum 27 sind im Betrieb der Vorrichtung vollständig mit dem (flüssigen) Hydraulikmedium 91 bzw. 92, insbesondere Hydrauliköl, gefüllt. Die Druckkammer 10 und die Verbindungskammer 20 sind über nicht bezeichnete Leitungen und über je ein Rückschlagventil 41 bzw. 42 an eine erste, nur symbolisch dargestellte Druckquelle 40 für unter Druck stehendes Hydraulikmedium angeschlossen. Die Bolzenkammer 30 bzw. deren Innenraum 30a ist ebenfalls vollständig mit einem Druckmedium 93 gefüllt, wobei es sich normalerweise um ein (flüssiges) Hydraulikmedium, insbesondere Hydrauliköl, handelt. Alternativ kann das Druckmedium auch ein pneumatisches Medium sein. Die Bolzenkammer 30 bzw. deren Innenraum 30a ist über eine nicht bezeichnete Leitung und ein Rückschlagventil 51 an eine zweite Druckquelle 50 für das unter Druck stehende Druckmedium 93 angeschlossen. Durch die Ringspalte zwischen dem Plunger 14 und der Durchführungsöffnung 13 sowie zwischen den Kolbenabschnitten 25a, 25b und den Innenwänden der diese umgebenden Kammerabschnitte 21, 22 der Verbindungskammer 20 sowie zwischen dem Bolzenabschnitt 35a und der Innenwand des diesen umgebenden Kammerabschnitts 31 der Bolzenkammer 30 sowie zwischen dem Bolzenabschnitt 35b und der Durchführungsöffnung 32 austretendes Hydraulik- oder Druckmedium (Leckage) wird über nicht bezeichnete Leitungen in Auffangtanks 60, 61, 62 abgeführt und aus den Druckquellen 40 und 50 nachgefüllt.

An die Bolzenkammer 30 sind an zwei diametral gegenüberliegenden Stellen zwei Druckspeicher 37 und 38 angeschlossen, wobei die Verbindungsleitungen 37a und 38a nahe der Durchführungsöffnung 32 in den zylindrischen Kammerabschnitt 31 einmünden. Die Druckspeicher 37 und 38 sind normalerweise Hydrospeicher, können aber auch als Druckgasspeicher ausgeführt sein. Es können auch mehr als zwei Druckspeicher vorzugsweise gleichabständig rund um die Bolzenkammer 30 angeordnet sein. Die Druckspeicher dienen, wie aus der Funktionsbeschreibung der Vorrichtung weiter unten hervorgeht, der Rückstellung des Schlagbolzens 35.

Die Anordnung der Druckspeicher sollte über den Umfang gleichmässig sein, damit beim Ausfahren des Schlagbolzens 35 (in der Zeichnung nach rechts) keine strömungsbedingten Querkräfte entstehen, die den Schlagbolzen 35 aus der Achse bringen und so einen schnellen Verschleiss hervorrufen können. Anstelle zwei oder mehrerer Druckspeicher könnte auch ein einziger Druckspeicher mit zwei oder mehreren Verbindungsleitungen zur Bolzenkammer 30 vorgesehen sein, wobei die zwei bzw. mehreren Anschlussöffnungen dieser Verbindungsleitungen gleichmässig über den Umfang der Bolzenkammer 30 verteilt sein sollten.

Dem Plunger 14 ist ein Plungerantrieb 70 zugeordnet, der es erlaubt, den Plunger 14 um eine bestimmte Wegstrecke in die Druckkammer 10 hinein zu stossen. Im dargestellten Ausführungsbeispiel ist der Plungerantrieb 70 als Nockenscheibe ausgebildet, die von einem nicht dargestellten motorischen Antrieb, zum Beispiel einem elektrischen oder hydraulischen Motor, antreibbar ist. Alternativ kann der Plungerantrieb auch als elektrischer oder hydraulischer Linearantrieb ausgebildet sein.

Die erfindungsgemässe Vorrichtung ermöglicht, wie aus der nachfolgenden Funktionsbeschreibung im Detail hervorgeht, das hydraulische Speichern grosser Energiemengen mittels einer vergleichbar geringen Leistung, d.h. eine relativ lange Ladezeit, und die Abgabe dieser gespeicherten hydraulischen Energie in einer sehr kurzen Entladezeit. Das Grössenverhältnis von Aufladezeit zur Entladezeit beträgt abhängig von der installierten Antriebsleistung für den Plunger 14 etwa 100:1 bis 1000:1.

Die vollständig mit flüssigem Hydraulikmedium gefüllte Druckkammer 10 bildet den Energiespeicher. Die hydraulische Kapazität C der Druckkammer berechnet sich nach der folgenden Gleichung:

$$C = \frac{V_0}{E}$$

worin $V_0$ das Volumen der Druckkammer und E der Elastizitätsmodul des flüssigen Mediums sind. Die potenzielle Energie der hydraulischen Kapazität ergibt sich allgemein aus der folgenden Gleichung:

$$W = \frac{C \cdot p^2}{2}$$

worin p der Druck des Hydraulikmediums in der Druckkammer ist.

Wird das Volumen des Hydraulikmediums 91 innerhalb der Druckkammer 10 zum Beispiel durch das Eindringen eines Plungers 14 um einen bestimmten Betrag dV verkleinert, so entsteht eine Druckerhöhung dp, die sich nach folgender Gleichung berechnet:

$$dp = \frac{dV}{C}$$

Es ist physikalisch bekannt, dass der Kompressionsmodul K und der Elastizitätsmodul E (E=1/K) eines flüssigen Mediums abhängig von der Temperatur und vom Druck sind. Beide Abhängigkeiten können sowohl theoretisch berechnet als auch praktisch ermittelt werden, um entsprechende Massnahmen für das Erhalten der Prozessstabilität in die Konstruktion bzw. in den Betrieb einleiten zu können (z.B. Temperierung der Vorrichtung).

Nachstehend ist anhand der Figuren 1-6 die Funktions- bzw. Betriebsweise der erfindungsgemässen Vorrichtung beschrieben.

Sowohl die Druckkammer 10 als auch der Übertragungsraum 27 der Verbindungskammer 20 sind vollständig mit dem Hydraulikmedium 91 bzw. 92 gefüllt und stehen unter dem gleichen Fülldruck von ca. 10-100 bar. Dadurch, dass die Stirnflächen des Stufenkolbens 25 unterschiedlich gross sind und dass die Umfangsflächen des Kolbens 25 durch die Dichtungsart (Ringspaltdichtung) praktisch drucklos sind, wird sich der Stufenkolben 25 aufgrund der auf seine Stirnflächen einwirkenden Kräfte (in der Zeichnung) nach links bewegen und über den Ventilkörper 26 formschlüssig und dichtungsfrei die Blende 11 zur Druckkammer 10 schliessen (Fig. 1).

Zumindest ein Teil des eingespannten Volumens des Hydraulikmediums zwischen der Blende 11 und dem Kolbenabschnitt 25a des Stufenkolbens 25 entweicht bei dieser Bewegung des Stufenkolbens 25 über die Ringspaltdichtung in eine Leitung zum Auffangtank 61. Falls der Stufenkolben 25 mit Dichtungselementen abgedichtet ist, muss an dieser Stelle ein Ventil vorgesehen sein. Der Fülldruck bewirkt gleichzeitig in der Druckkammer 10 ein Ausfahren des Plungers 14 bis zur Anlage an die Nockenscheibe des Plungerantriebs 70.

Der Innenraum 30a der Bolzenkammer 30 ist vollständig mit dem Druckmedium 93 befüllt, wobei der Fülldruck höher ist als im Übertragungsraum 27 der Verbindungskammer 20. Der eingestellte Fülldruck im Innenraum 30a ist abhängig vom eingestellten Druck des Hydraulikmediums 92 und verhält sich ungefähr umgekehrt proportional zu diesem Druck. Die Proportionalität wird bestimmt durch das Verhältnis der Ringfläche 35c zur Kolbenstirnfläche des Bolzenabschnitts 35a des Schlagbolzens 35. Der Fülldruck sorgt dafür, dass der Schlagbolzen 35 mit seinem Bolzenabschnitt 35a (in der Zeichnung) nach links bis zu einem inneren Anschlag eingefahren wird (Fig. 1). Der Schlagbolzen 35 ist ebenfalls mittels Ringspaltdichtungen abgedichtet. Beim Einfahren des Schlagbolzens 35 auf den internen Anschlag wird ein Teil des eingespannten Hydraulikmediumvolumens im Übertragungsraum 27 zwischen dem Bolzenabschnitt 35a und dem Kolbenabschnitt 25b des Stufenkolbens 25 sowohl über die Ringspaltdichtung des Stufenkolbens 25 als auch über die Ringspaltdichtung des Schlagbolzens 35 in Leitungen zum Auffangtank 61 abgeführt.

Die Druckspeicher 37 und 38, die mit dem Innenraum 30a der Bolzenkammer 30 kommunizierend verbunden sind, sollten eine möglichst geringe Trägheit haben und so dimensioniert sein, dass durch das Ausfahren des Schlagbolzens 35 ein möglichst geringer Druckanstieg stattfindet, d.h. sie sollten eine möglichst flache Kennlinie haben.

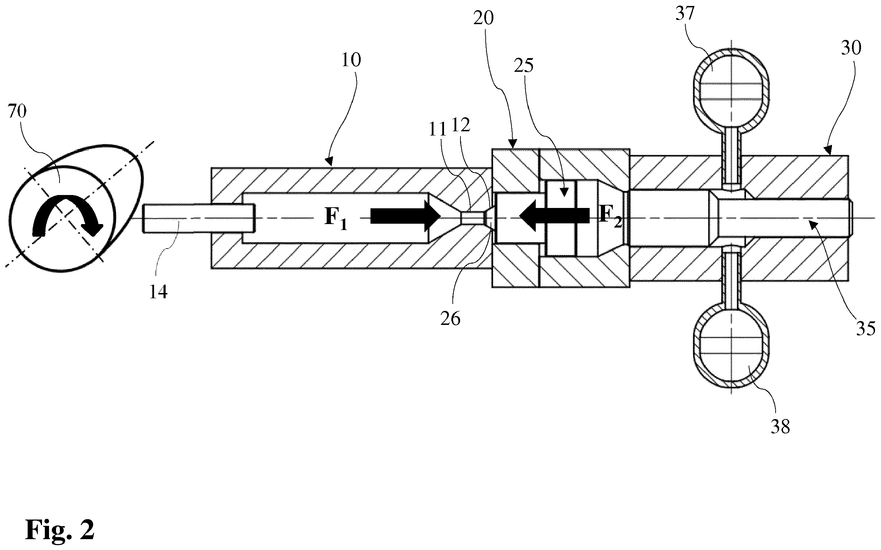

Wenn sich die Nockenscheibe des Plungerantriebs 70 dreht, wird der Plunger 14 in die Druckkammer 10 hineingeschoben. Durch das Eindringen des Plungers 14 in die Druckkammer 10 wird das darin enthaltene Hydraulikmedium 91 komprimiert, wobei sich der Druck nahezu proportional zum Weg des Plungers erhöht. Die gespeicherte Energie nimmt im Quadrat zur Druckerhöhung zu (Fig. 2).

Solange die Kraft F1, die durch den (erhöhten) Druck in der Druckkammer 10 bestimmt wird und die auf den Stufenkolben 25 wirkt, kleiner ist als die Kraft F2, die durch den Druck im Übertragungsraum 27 der Verbindungskammer 20 bestimmt wird und von der anderen Seite auf den Stufenkolben 25 wirkt, bleibt die Blende 11 geschlossen.

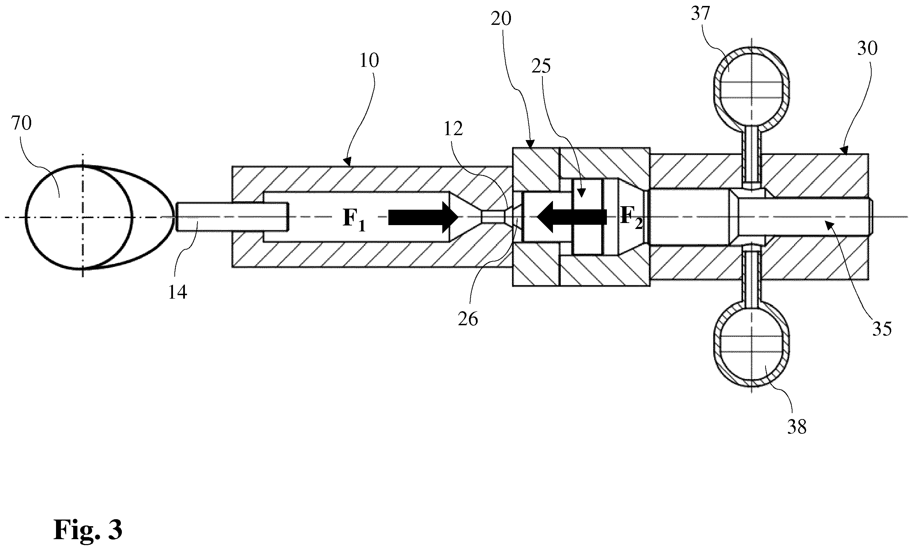

Erreicht der Plunger 14 eine bestimmte Eindringtiefe und verdrängt so ein entsprechendes Hydraulikmediumvolumen, so wird die Kraft F1 grösser als die Kraft F2 und der Stufenkolben 25 bewegt sich nach rechts und die Blende 11 wird damit geöffnet (Fig. 3).

Der im Querschnitt kleinere Kolbenabschnitt 25a des Stufenkolbens 25 wird in einem Zeitraum <0.2 ms mit dem hohen Druck aus der Druckkammer 10 beaufschlagt. Diese plötzliche Druckbeaufschlagung mit erheblicher Kraft bewirkt eine stossartige Bewegung des Stufenkolbens 25 (in der Zeichnung) nach rechts, die einen Druckstoss im Übertragungsraum 27 der Verbindungskammer 20 auslöst. Der Druckstoss durchquert den Übertragungsraum 27 mit Schallgeschwindigkeit (ca. 1340 m/s für Hydrauliköl). Aufgrund des relativ kurzen Abstands zwischen dem Stufenkolben 25 und dem Schlagbolzen 35 erreicht die Stosswelle den Schlagbolzen 35 praktisch ohne zeitliche Verzögerung.

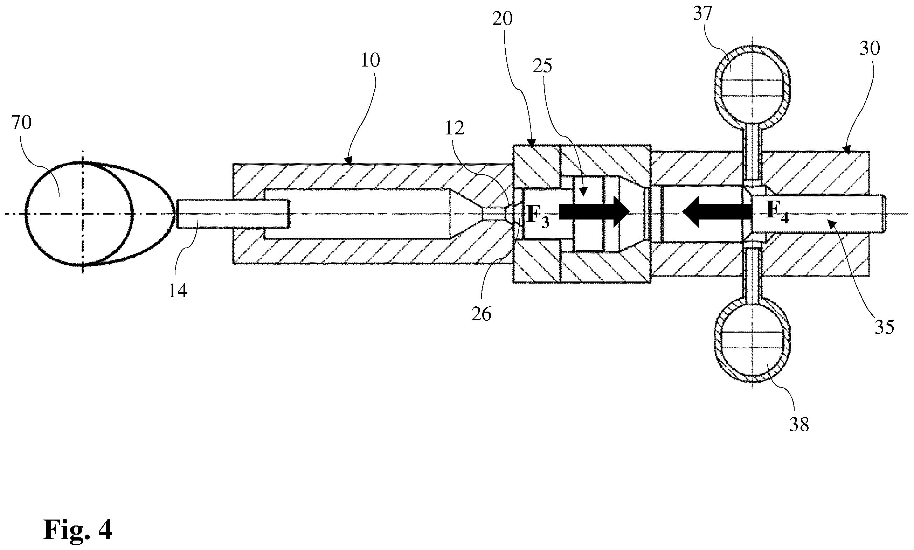

Der Schlagbolzen 35 setzt sich in Bewegung, sobald die Stosswelle eine ausreichend hohe Kraft F3 hat, um die Kraft F4 zu überwinden, die auf die Ringfläche des Schlagbolzens 35 wirkt (Fig. 4).

Das Hydraulikmedium 91 aus der Druckkammer 10 expandiert weiter und treibt den Stufenkolben 25 und den Schlagbolzen 35 (in der Zeichnung) nach rechts, der Schlagbolzen 35 fährt aus der Bolzenkammer 30 aus. Die Geschwindigkeiten des Stufenkolbens 25 und des Schlagbolzens 35 sind dabei aufgrund der konstruktiven Übersetzung unterschiedlich (Fig. 5).

Die Beaufschlagung des Schlagbolzens 35 mit der Stosswelle und die damit verbundenen Ausfahrbewegung des Schlagbolzens erzeugt die für den jeweiligen Anwendungszweck erforderliche impulsdynamische Prozesskraft. Der Schlagbolzen 35 treibt dabei im praktischen Einsatz ein Werkzeug, z.B. ein Schermesser oder einen Schlaghammer oder dgl. an.

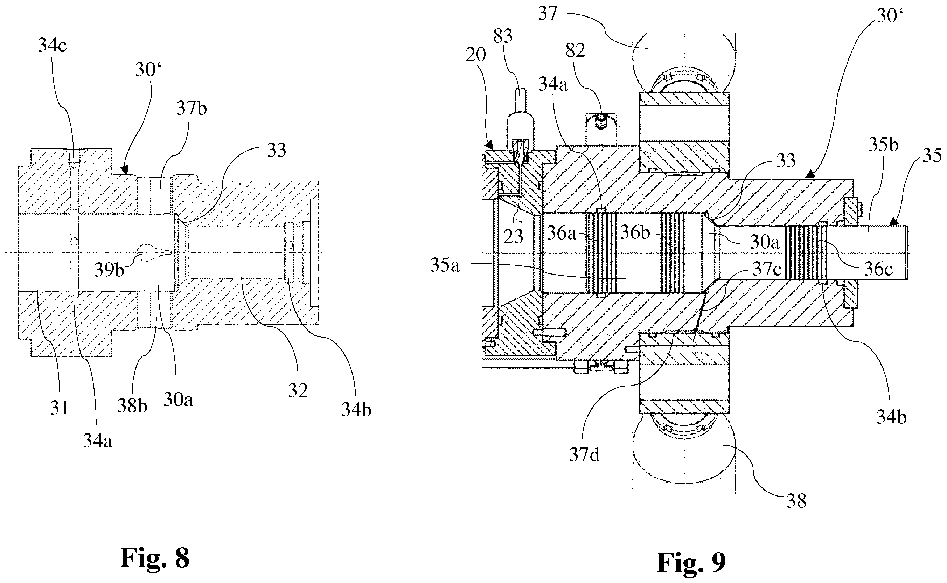

Bei seiner Ausfahrbewegung überfährt der im Querschnitt grössere Bolzenabschnitt 35a die Anschlussöffnungen 37b und 38b der Druckspeicher 37 und 38 in der Bolzenkammer 30. Der freie Durchlassquerschnitt der Anschlussöffnungen 37b und 38b wird daher mit dem Ausfahren des Schlagbolzens 35 zunehmend kleiner. Somit entsteht beim Ausfahren des Schlagbolzens 35 ein Staudruck vor den Anschlussöffnungen der Speicher 37 und 38. Dieser Staudruck wird beim Überfahren der Anschlussöffnungen durch den Bolzenabschnitt 35a des Schlagbolzens 35 immer grösser und erzeugt dadurch eine Gegenkraft, die die Schlagbolzengeschwindigkeit in der Endlage bis auf null reduziert. Somit wird vermieden, dass der Schlagbolzen 35 hart gegen den mechanischen Anschlag 33 auffährt. Die Anschlussöffnungen 37b und 38b sowie deren Anordnung in der Bolzenkammer 30 bilden also eine Endlagendämpfungsanordnung. Erfindungsgemäß weisen die Anschlussöffnungen einen von der Kreisform abweichenden, sich in Richtung vom Stufenkolben 25 weg, auf den Anschlag 33 hin, verkleinernden Querschnitt auf, so wie dies in Fig. 8 dargestellt ist. Durch diese erfindungsgemäßen birnen- oder tropfenförmige Querschnittsausbildung der Anschlussöffnungen wird der Aufbau des Staudrucks begünstigt.

Fig. 8 zeigt eine erfindungsgemäße Bolzenkammer 30', die sich von der Bolzenkammer 30 der Figuren 1-7 im Wesentlichen nur durch die Aussenform unterscheidet. Ferner weist die Bolzenkammer 30' vier Anschlussöffnungen für je einen (hier nicht dargestellten) Druckspeicher auf, wobei in der Figur jedoch nur die Anschlussöffnungen 37b, 38b und 39b sichtbar sind. Jede der vier Anschlussöffnungen weist den schon erwähnten birnen- oder tropfenförmigen, sich in Richtung auf den Anschlag 33 zu verjüngenden Öffnungsquerschnitt auf. Ferner sind in Fig. 8 zwei umlaufende Einstiche (Ringnuten) 34a und 34b im Kammerabschnitt 31 bzw. in der Durchführungsöffnung 32 dargestellt. Diese dienen als Sammelkanäle zur Abführung der Leckagen in die Auffangtanks 61 bzw. 62. Eine in den Einstich 34a mündende radiale Leitung 34c dient zum Anschluss eines Drucksensors 82 (siehe Fig. 9).

Die Ringspaltdichtung auf dem Bolzenabschnitt 35b ermöglicht dem Schlagbolzen 35 prinzipiell ein vollständiges Überfahren der Anschlussöffnungen 37b und 38b (und ggf. 39b). Damit der Schlagbolzen 35 aus einer Endlage wieder zurückgefahren werden kann, sind in diesem Fall zusätzlich spezifische hydraulische Massnahmen erforderlich, z.B. zusätzliche Leitungen 37c und 37d zu den Druckspeichern 37, 38, so wie dies in Fig. 9 dargestellt ist. Dabei verbindet mindestens eine Leitung 37c den Innenraum 30a der Bolzenkammer 30' im Bereich des Anschlags 33 mit einer rundumlaufenden Ringleitung 37d, die ihrerseits wieder mit den Druckspeichern 37 und 38 verbunden ist. Ferner ist aus Fig. 9 zu erkennen, dass die Bolzenabschnitte 35a und 35b mit Gruppen von Umfangseinstichen (Ringnuten) 36a, 36b und 36c versehen sind, welche zur Schmierverteilung und zentrischen Lagerung des Schlagbolzens 35 dienen. Mit 83 ist ein weiterer Drucksensor bezeichnet.

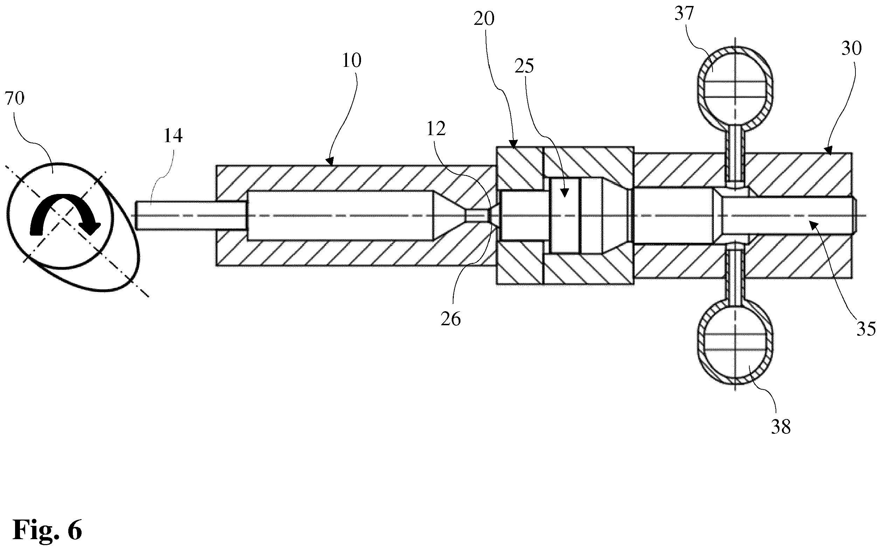

Die Vorrichtung liefert die für einen Arbeitsprozess, z.B. einen Scherprozess, erforderliche Antriebskraft bzw. Energie. Nach Durchführung des jeweiligen Arbeitsprozesses wird die Vorrichtung wieder in ihre Ausgangskonfiguration zurückgeführt. Dazu wird die Nockenscheibe des Plungerantriebs 70 weitergedreht, so dass der Plunger 14 durch den Druck in der Druckkammer 10 wieder aus dieser ausgefahren wird. Im Falle eines Linearantriebs wird dieser entsprechend zurückgefahren. Der Schlagbolzen 35 wird durch den Druck des Druckmediums 93 aus den Druckspeichern 37 und 38 eingefahren (in der Zeichnung nach links). Der Stufenkolben 25 wird vom Hydraulikmedium 92 im Übertragungsraum 27 (in der Zeichnung) nach links geschoben und die Blende 11 der Druckkammer 10 wird geschlossen. Fehlende Hydraulik- oder Druckmediumvolumina werden durch die Hydraulikquelle 40 bzw. die Druckquelle 50 kompensiert und überschüssige Hydraulik- oder Druckmediumvolumina werden durch die Leckagen der einzelnen Kammern eliminiert (Fig. 6).

Je nach Anwendungsfall der Vorrichtung können die vom Schlagbolzen 35 anzutreibenden Werkzeuge (z.B. Schermesser oder Schlaghammer) mit dem Schlagbolzen verbunden sein oder nicht.

Mit Hilfe eines einstellbaren Leerhubs zwischen dem Schlagbolzen 35 und dem Werkzeug können unterschiedlichste Kombinationen aus kinetischer Energie des Schlagbolzens und Restenergie (aus potentieller Energie) der Druckkammer 10 gefahren werden. Die Restenergie des Werkzeugs muss in diesem Fall separat durch geeignete Dämpfungsmassnahmen vernichtet werden.

Wenn das Werkzeug mit dem Schlagbolzen 35 fest verbunden ist, wird die Restenergie beider Elemente in der eingebauten Endlagendämpfung in der Vorrichtung intern vernichtet.

Der vom Schlagbolzen 35 angetriebene Arbeitsprozess hat bevorzugt stattzufinden, bevor der Schlagbolzen die Anschlussöffnungen 37b und 38b zu den Druckspeichern 37 und 38 überfährt (Beginn der Endlagendämpfung).

Für die Regelung des Fülldrucks in den Kammern 10, 20 und 30 der Vorrichtung können nach den Druckquellen 40 und 50 Servoventile oder Druckproportionalventile mit oder ohne elektrische Betätigung eingesetzt werden. Das Rückschlagventil 41 ist zwingend erforderlich. Die Rückschlagventile 42 und 51 können auch durch entsprechend dimensionierte Drosseln ersetzt werden.

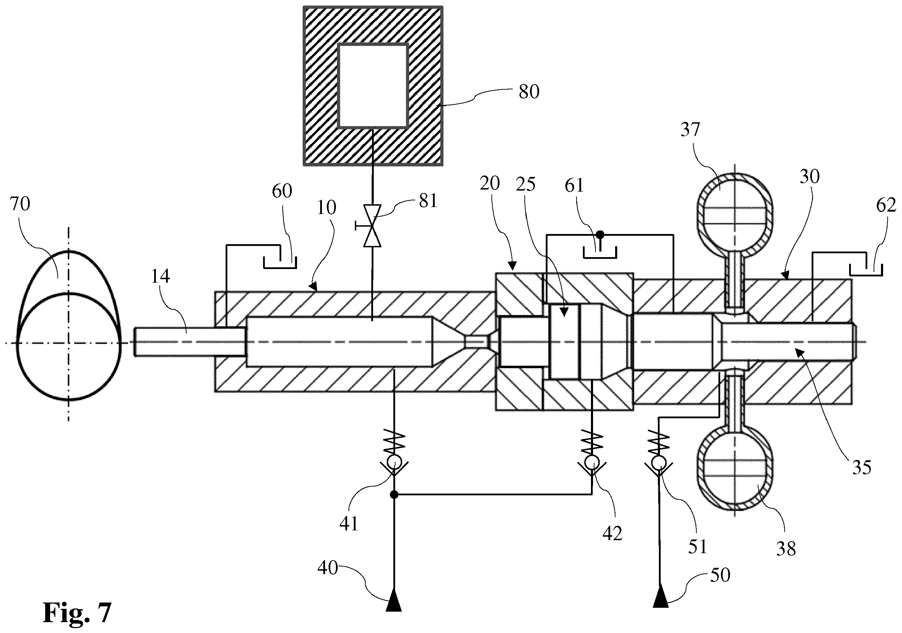

In Fig. 7 ist eine Variante der erfindungsgemässen Vorrichtung dargestellt, die sich vom Ausführungsbeispiel der Figuren 1 bis 6 nur durch einen zusätzlichen Hochdruckbehälter 80 unterscheidet, welcher über eine nicht bezeichnete Leitung und über ein z.B. elektrisch betätigbares Absperrventil 81 je nach Stellung des letzteren mit der Druckkammer 10 kommunizierend verbunden bzw. von dieser abgekoppelt ist. Ansonsten stimmt diese Variante in Aufbau und Funktion vollkommen mit der Vorrichtung gemäss Fig. 1 überein, weshalb in Fig. 7 nicht alle Bezugszeichen eingetragen sind.

Der zusätzliche Hochdruckbehälter 80 dient dazu, im Falle eines kontinuierlich drehenden Plungerantriebs 70 ein Auslösen des Stossimpulses zu verhindern, falls das aus irgendwelchen Gründen gewünscht oder erforderlich ist. Dazu wird das normalerweise geschlossene Absperrventil 81 geöffnet und der Hochdruckbehälter 80 dadurch mit der Druckkammer 10 verbunden. Die Kapazität der Druckkammer 10 wird dadurch erhöht und bei gleichbleibendem Hub des Plungers 14 wird die Druckerhöhung kleiner und die Blende 11 wird bei geeigneter Auslegung des Systems nicht geöffnet.

Bei einer Fehlfunktion des Stufenkolbens 25, z.B. wenn der Fülldruck im Übertragungsraum 27 zu niedrig ist oder die Blende 11 nicht geschlossen ist, folgt der Schlagbolzen 35 gemäss den eingebauten Übersetzungen der Kinematik des Plungerantriebs 70 bzw. der Bewegung des Plungers 14.

Die vorstehend beschriebenen Ausführungsbeispiele der erfindungsgemässen Vorrichtung sind insbesondere auf die Anwendung in einem Trennprozess (z.B. Abscheren eines Werkstücks von einem Stangenmaterial unabhängig vom Temperaturbereich) gerichtet, können aber beispielsweise auch in einem Verdichtungsprozess, z.B. in der Pulvermetallurgie, oder zum Zerbrechen eines Materials eingesetzt werden.

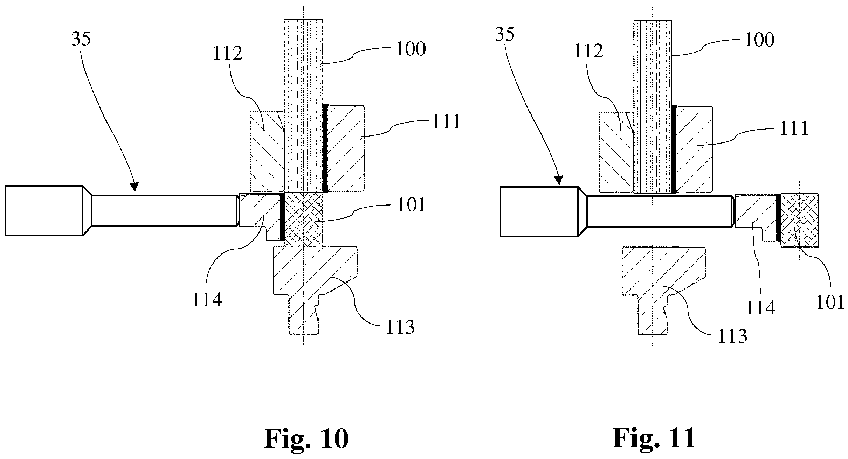

Die Figuren 10 und 11 zeigen beispielhaft schematisch einen Einsatz der erfindungsgemässen Vorrichtung in einem Scherprozess.

Mit 100 ist eine Stange bezeichnet, von der ein Werkstück 101 abgeschert wird. Die Stange 100 ist zwischen einem Festmesser 111 und einer Klemmbacke 112 gehalten und liegt mit dem Werkstück 101 an einem Anschlag 113 an (Fig. 10). Der Schlagbolzen 35 der erfindungsgemässen Vorrichtung zur Erzeugung impulsdynamischer Prozesskräfte liegt an einem Schermesser 114 an und stösst dieses beim schlagartigen Ausfahren in kürzester Zeit gegen das Werkstück und trennt dieses vom Rest der Stange 100 ab (Fig. 11).

Selbstverständlich ist grundsätzlich auch möglich, dass der Schlagbolzen 35 nicht direkt am Schermesser 114 ansetzt, sondern dass noch weitere Teile dazwischen angeordnet sind.

**Patentansprüche**

1. Vorrichtung zur Erzeugung impulsdynamischer Prozesskräfte, umfassend:

   - eine Druckkammer (10), in der unter Druck stehendes Hydraulikmedium (91) angeordnet ist;
   - Mittel (14) zur temporären Erhöhung des Drucks des in der Druckkammer (10) befindlichen Hydraulikmediums (91) ;
   - eine der Druckkammer (10) nachgeordnete, mit dieser verbundene Verbindungskammer (20);
   - eine der Verbindungskammer (20) nachgeordnete, mit dieser verbundene Bolzenkammer (30; 30');
   - einen in der Verbindungskammer (20) verschiebbar angeordneten Stufenkolben (25), der einen Ventilkörper (26) zum Verschliessen einer die Druckkammer (10) mit der Verbindungskammer (20) verbindenden Blende (11) und einen der Bolzenkammer (30; 30') zugewandten Kolbenabschnitt (25b) aufweist, der einen Übertragungsraum (27) der Verbindungskammer (20) zwischen dem Kolbenabschnitt (25b) und der Bolzenkammer (30; 30') gegenüber der der Bolzenkammer (30; 30') abgewandten Seite der Verbindungskammer (20) abdichtet, wobei im Übertragungsraum (27) unter Druck stehendes Hydraulikmedium (92) angeordnet ist;
   - einen in der Bolzenkammer (30; 30') verschiebbar angeordneten Schlagbolzen (35), der einen ersten Bolzenabschnitt (35a) mit einem grösseren Querschnitt und einen zweiten Bolzenabschnitt (35b) mit einem kleineren Querschnitt aufweist, wobei der erste Bolzenabschnitt (35a) einen den zweiten Bolzenabschnitt (35b) umgebenden Innenraum (30a) der Bolzenkammer (30; 30') gegenüber der Verbindungskammer (20) abdichtet; und
   - mindestens einen Druckspeicher (37; 38) mit unter Druck stehendem Druckmedium (93), der an die Bolzenkammer (30; 30') angeschlossen ist und über eine Anschlussöffnung (37b, 38b, 39b) mit dem Innenraum (30a) der Bolzenkammer (30; 30') in kommunizierender Verbindung steht,

   **dadurch gekennzeichnet, dass** sich der Öffnungsquerschnitt der Anschlussöffnung (37b, 38b, 39b) in Richtung vom Stufenkolben (25) weg verjüngt.

2. Vorrichtung nach Anspruch 1, **dadurch gekennzeichnet, dass** die Bolzenkammer (30; 30') der Verbindungskammer (20) unmittelbar nachgeordnet ist.

3. Vorrichtung nach einem der vorangehenden Ansprüche, **dadurch gekennzeichnet, dass** sie zwei oder mehrere Druckspeicher (37, 38) mit zugeordneten Anschlussöffnungen (37b, 38b, 39b) aufweist, welche in der Bolzenkammer (30; 30') diametral gegenüberliegend bzw. gleichabständig angeordnet sind.

4. Vorrichtung nach einem der vorangehenden Ansprüche, **dadurch gekennzeichnet, dass** der Schlagbolzen (35) in der Bolzenkammer (30; 30') bis zu einer Endlage ausfahrbar ist und dass die Vorrichtung eine Endlagendämpfungsanordnung (37b, 38b) aufweist, welche den Schlagbolzen (35) vor Erreichen seiner Endlage abbremst.

5. Vorrichtung nach Anspruch 4, **dadurch gekennzeichnet, dass** die mindestens eine Anschlussöffnung (37b, 38b, 39b) für den Druckspeicher (37, 38) so in der Bolzenkammer (30; 30') angeordnet ist, dass sie beim Ausfahren des Schlagbolzens (35) durch den ersten Bolzenabschnitt (35a) zunehmend verschlossen wird und der dadurch entstehende Staudruck den Schlagbolzen (35) zunehmend bis zum vollständigen Stillstand bremst.

6. Vorrichtung nach Anspruch 4 oder 5, **dadurch gekennzeichnet, dass** die Endlage durch einen Anschlag (33) begrenzt ist.

7. Vorrichtung nach einem der vorangehenden Ansprüche, **dadurch gekennzeichnet, dass** die Druckkammer (10), die Verbindungskammer (20) und die Bolzenkammer (30; 30') längs einer gemeinsamen Achse (A) fluchtend hintereinander angeordnet sind.

8. Vorrichtung nach einem der vorangehenden Ansprüche, **dadurch gekennzeichnet, dass** die Mittel zur temporären Erhöhung des Drucks des in der Druckkammer (10) befindlichen Hydraulikmediums (91) zur Kompression des in der Druckkammer befindlichen Hydraulikmediums (91) einen in die Druckkammer (10) einschiebbaren Plunger (14) oder einen Hochdruckspeicher aufweisen, aus dem über ein Ventil ein Druckimpuls an die Druckkammer abgebbar ist.

9. Vorrichtung nach Anspruch 8, **dadurch gekennzeichnet, dass** sie einen Plungerantrieb (70) zum Einschieben des Plungers (14) in die Druckkammer (10) aufweist.

10. Vorrichtung nach einem der vorangehenden Ansprüche, **dadurch gekennzeichnet, dass** sie Mittel (40, 50, 41, 42, 51) zur Aufrechterhaltung des Fülldrucks in der Druckkammer (10), im Übertragungsraum (27) und im Innenraum (30a) der Bolzenkammer (30; 30') aufweist.

11. Vorrichtung nach einem der vorangehenden Ansprüche, **dadurch gekennzeichnet, dass** sie Leitungen aufweist, über welche beim Verschieben des Stufenkolbens (25) und des Schlagbolzens (35) durch Dichtungsspalte austretendes oder verdrängtes Hydraulikmedium (91, 92) oder Druckmedium (93) einem Auffangtank (61, 62) zuführbar ist.

12. Verwendung der Vorrichtung nach einem der vorangehenden Ansprüche zum Antrieb eines Werkzeugs in einer Umformeinrichtung, einer Trenneinrichtung oder einer Verdichtungseinrichtung.

13. Verwendung nach Anspruch 12, wobei das Werkzeug ein Scherwerkzeug zum Abscheren eines Werkstücks von einem Stangenmaterial ist.

14. Verwendung nach Anspruch 12, wobei das Werkzeug ein Schlaghammer zum Verdichten oder zum Zerbrechen eines Materials ist.

**Claims**

1. Apparatus for generating impulse-dynamic process forces, comprising:

   - a pressure chamber (10) in which pressurised hydraulic medium (91) is arranged;
   - means (14) for temporarily increasing the pressure of the hydraulic medium (91) located in the pressure chamber (10);
   - a connecting chamber (20) arranged downstream of the pressure chamber (10) and connected thereto;
   - a bolt chamber (30; 30') arranged downstream of the connecting chamber (20) and connected thereto;
   - a stepped piston (25) arranged so as to be displaceable in the connecting chamber (20), which piston has a valve body (26) for closing an orifice (11) connecting the pressure chamber (10) to the connecting chamber (20), and a piston portion (25b) facing the bolt chamber (30; 30'), by means of which piston portion a transmission space (27) of the connecting chamber (20) between the piston portion (25b) and the bolt chamber (30; 30') is sealed with respect to the side of the connecting chamber (20) remote from the bolt chamber (30; 30'), the transmission space (27) having pressurised hydraulic medium (92) arranged therein; and
   - an impact bolt (35) arranged so to be displaceable in the bolt chamber (30; 30'), which impact bolt has a first bolt portion (35a) with a larger cross-section and a second bolt portion (35b) with a smaller cross-section, the first bolt portion (35a) sealing an interior space (30a) of the bolt chamber (30; 30') that surrounds the second bolt portion (35b) with respect to the connecting chamber (20), and
   - at least one pressure reservoir (37; 38) containing pressurised pressure medium (93), which pressure reservoir is connected to the bolt chamber (30; 30') and is in communicating connection via a connection port (37b, 38b, 39b) with the interior space (30a) of the bolt chamber (30; 30').

   **characterised in that** the opening cross-section of the at least one connection port (37b, 38b, 39b) tapers in a direction away from the stepped piston (25).

2. Apparatus according to claim 1, **characterised in that** the bolt chamber (30; 30') is arranged immediately downstream of the connecting chamber (20).

3. Apparatus according to any one of the preceding claims, **characterised in that** it has two or more pressure reservoirs (37, 38) with associated connection ports (37b, 38b, 39b) which are arranged diametrically opposite or at equal distances apart in the bolt chamber (30; 30').

4. Apparatus according to any one of the preceding claims, **characterised in that** the impact bolt (35) is arranged to travel out as far as an end position in the bolt chamber (30; 30'), and the apparatus has an end position damping arrangement (37b, 38b) which brakes the impact bolt (35) before it reaches

ing

5. Apparatus according to claim 4, **characterised in that** the at least one connection port (37b, 38b, 39b) for the pressure reservoir (37, 38) is arranged in the bolt chamber (30; 30') so that, during the outward travel of the impact bolt (35), it is increasingly closed by the first bolt portion (35a) and the resulting back pressure increasingly brakes the impact bolt (35) until it comes to a complete standstill.

6. Apparatus according to claim 4 or 5, **characterised in that** the end position is defined by a stop (33).

7. Apparatus according to any one of the preceding claims, **characterised in that** the pressure chamber (10), the connecting chamber (20) and the bolt chamber (30) are arranged in alignment one after the other along a common axis (A).

8. Apparatus according to any one of the preceding claims, **characterised in that** the means for temporarily increasing the pressure of the hydraulic medium (91) located in the pressure chamber (10) have, for compression of the hydraulic medium (91) located in the pressure chamber (10), a plunger (14) which is arranged to be pushed into the pressure chamber (10) or a high-pressure reservoir from which a pressure impulse is deliverable to the pressure chamber via a valve.

9. Apparatus according to claim 8, **characterised in that** it has a plunger drive (70) for pushing the plunger (14) into the pressure chamber (10).

10. Apparatus according to any one of the preceding claims, **characterised in that** it has means (40, 50, 41, 42, 51) for maintaining the fill pressure in the pressure chamber (10), in the transmission space (27) and in the interior space (30a) of the bolt chamber (30; 30').

11. Apparatus according to any one of the preceding claims, **characterised in that** it has lines via which hydraulic medium (91, 92) or pressure medium (93) that is displaced or escapes through sealing gaps on displacement of the stepped piston (25) and the impact bolt (35) can be supplied to a collecting tank (61, 62).

12. Use of the apparatus according to any one of the preceding claims for driving a tool in a forming device, a separating device or a compacting device.

13. Use according to claim 12, wherein the tool is a shearing tool for shearing off a workpiece from a rod material.

14. Use according to claim 12, wherein the tool is an impact hammer for compacting or breaking up a material.

## Revendications

1. Dispositif pour générer des forces de processus d'impulsion dynamique, comprenant

    - une chambre de pression (10) dans laquelle est disposé un fluide hydraulique (91) sous pression ;
    - des moyens (14) permettant d'augmenter temporairement la pression du fluide hydraulique (91) situé dans la chambre de pression (10) ;
    - une chambre de liaison (20) disposée en aval de la chambre de pression (10) et reliée à celle-ci ;
    - une chambre à percuteur (30 ; 30') disposée en aval de la chambre de liaison (20) et reliée à celle-ci ;
    - un piston étagé (25) disposé de façon mobile en translation dans la chambre de liaison (20) et comprenant un corps de valve (26) pour fermer un étranglement (11) reliant la chambre de pression (10) à la chambre de liaison (20), et une portion de piston (25b) tournée vers la chambre à percuteur (30 ; 30') et étanchéifiant un espace de transmission (27) de la chambre de liaison (20) entre la portion de piston (25b) et la chambre à percuteur (30 ; 30') par rapport au côté de la chambre de liaison (20) qui est opposé à la chambre à percuteur (30 ; 30'), un fluide hydraulique (92) sous pression étant disposé dans l'espace de transmission (27) ;
    - un percuteur (35) disposé de façon mobile en translation dans la chambre à percuteur (30 ; 30') et comprenant une première portion de percuteur (35a) de plus grande section transversale et une deuxième portion de percuteur (35b) de plus petite section transversale, la première portion de percuteur (35a) étanchéifiant un espace intérieur (30a) de la chambre à percuteur (30 ; 30'), entourant la deuxième portion de percuteur (35b), par rapport à la chambre de liaison (20) ; et
    - au moins un accumulateur de pression (37 ; 38) ayant un fluide sous pression (93), qui est relié à la chambre à percuteur (30 ; 30') et qui est en communication avec l'espace intérieur (30a) de la chambre à percuteur (30 ; 30') via un orifice de raccordement (37b, 38b, 39b),

    **caractérisé en ce que**
    la section transversale d'ouverture de l'orifice de raccordement (37b, 38b, 39b) va en se rétrécissant dans la direction en éloignement du piston étagé (25).

**2.** Dispositif selon la revendication 1, **caractérisé en ce que** la chambre à percuteur (30 ; 30') est disposée directement en aval de la chambre de liaison (20).

**3.** Dispositif selon l'une des revendications précédentes, **caractérisé en ce que** il comprend deux ou plusieurs accumulateurs de pression (37, 38) ayant des orifices de raccordement associés (37b, 38b, 39b) qui sont disposés dans la chambre à percuteur (30 ; 30') en étant diamétralement opposés ou de façon équidistante.

**4.** Dispositif selon l'une des revendications précédentes, **caractérisé en ce que** le percuteur (35) est déployable jusqu'à une position de fin de course dans la chambre à percuteur (30 ; 30'), et **en ce que** le dispositif comprend un ensemble amortisseur de position de fin de course (37b, 38b) qui freine le percuteur (35) avant d'atteindre sa position de fin de course.

**5.** Dispositif selon la revendication 4, **caractérisé en ce que** ledit au moins un orifice de raccordement (37b, 38b, 39b) pour l'accumulateur de pression (37, 38) est disposé dans la chambre à percuteur (30 ; 30') de manière à être de plus en plus fermé par la première portion de percuteur (35a) lors du déploiement du percuteur (35), et la pression dynamique qui en résulte freine le percuteur (35) de plus en plus jusqu'à l'arrêt complet.

**6.** Dispositif selon la revendication 4 ou 5, **caractérisé en ce que** la position de fin de course est limitée par une butée (33).

**7.** Dispositif selon l'une des revendications précédentes, **caractérisé en ce que** la chambre de pression (10), la chambre de liaison (20) et la chambre à percuteur (30 ; 30') sont disposées en alignement les unes derrière les autres le long d'un axe commun (A).

**8.** Dispositif selon l'une des revendications précédentes, **caractérisé en ce que** en vue de la compression du fluide hydraulique (91) situé dans la chambre de pression, les moyens permettant d'augmenter temporairement la pression du fluide hydraulique (91) situé dans la chambre de pression (10) comprennent un plongeur (14) pouvant être inséré dans la chambre de pression (10) ou un accumulateur de haute pression à partir duquel une impulsion de pression peut être émise à la chambre de pression via une valve.

**9.** Dispositif selon la revendication 8, **caractérisé en ce que** il comprend en entraînement de plongeur (70) pour insérer le plongeur (14) dans la chambre de pression (10).

**10.** Dispositif selon l'une des revendications précédentes, **caractérisé en ce que** il comprend des moyens (40, 50, 41, 42, 51) permettant de maintenir une pression de remplissage dans la chambre de pression (10), dans l'espace de transmission (27) et dans l'espace intérieur (30a) de la chambre à percuteur (30 ; 30').

**11.** Dispositif selon l'une des revendications précédentes, **caractérisé en ce que** il comprend des conduits permettant d'amener un fluide hydraulique (91, 92) ou un fluide sous pression (93), s'échappant par des interstices d'étanchéité ou refoulé lors de la translation du piston étagé (25) et du percuteur (35), jusqu'à un réservoir de collecte (61, 62).

**12.** Utilisation du dispositif selon l'une des revendications précédentes pour entraîner un outil dans une installation de formage, dans une installation de séparation ou dans une installation de compactage.

**13.** Utilisation selon la revendication 12, dans laquelle l'outil est un outil de cisaillement pour cisailler une pièce depuis un matériau en barre.

**14.** Utilisation selon la revendication 12, dans laquelle l'outil est un marteau à percussion pour compacter ou briser un matériau.

**Fig. 1**

Fig. 2

Fig. 3

**Fig. 4**

Fig. 5

EP 3 334 958 B1

**Fig. 6**

**Fig. 7**

Fig. 8

Fig. 9

EP 3 334 958 B1

Fig. 11

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2107510 A1

- GB 128589 A